# EUROPEAN PATENT APPLICATION

(11) **EP 3 078 967 A1**
(43) Date of publication of application: **12.10.2016**
(21) Application number: 15162872.4
(22) Date of filing: 09.04.2015
(51) Int. Cl.: G01N 29/04, G01N 29/34

(54) **A SYSTEM AND A METHOD FOR DETECTING DAMAGE**

(30) Priority: 08.04.2015 PL 41187615
(71) Applicant: Akademia Gorniczo-Hutnicza im. Stanislawa Staszica w Krakowie, 30-059 Krakow (PL)
(72) Inventor: Staszewski, Wieslaw J., 64-840 Budzyn (PL); Uhl, Tadeusz, 32-020 Wieliczka (PL); Dziedziech, Kajetan, 34-400 Nowy Targ (PL)
(74) Representative: Eupatent.pl

(57) **Abstract**

A method for detecting damage in a tested object. The method comprises the steps of: positioning the tested object (105) between two actuators (103, 104) and a receiver (106); applying to the two actuators (103, 104) a first pair of excitation signals, wherein the first excitation signal applied to the first actuator (103) is a high frequency signal and the second excitation signal applied to the second actuator (104) is a low frequency signal; obtaining from the receiver (106) the tested object's response to the first pair of excitation signals as a first response signal; applying to the two actuators (103, 104) a second pair of excitation signals, wherein the first excitation signal applied to the first actuator (103) is a high frequency signal and the second excitation signal applied to the second actuator (104) is a low frequency signal which is in antiphase with respect to the low frequency signal of the first pair of excitation signals; obtaining from the receiver (106) the tested object's response to the second pair of excitation signals as a second response signal; and analyzing the first response signal and the second response signal to determine whether a damage is present in the tested object.

## Description

### TECHNICAL FIELD

The present invention relates to a system and a method for detecting damage in various types of materials. In particular, the present invention relates to detecting fatigue microdamage in metals and impact damage in composites.

### BACKGROUND

There is a need for an effective, non-destructive and relatively inexpensive system and method for detecting damage in structures when performing periodic inspections or while continuous monitoring. For example, the inspections or monitoring could be performed on an aircraft hull, which is subject to periodic load changes, which can lead to fatigue that is invisible to the naked eye, and yet very dangerous.

A US patent application US20050109110 discloses testing structures or bodies to determine if they contain defects. The defects may be, for example, cracks, delamination etc. Conventional non-destructive testing can explore nonlinearities of such defects. The non-linearities produce intermodulation products in the form of side-bands of an excitation signal. The amplitudes of the side-bands are used to provide an indication of the structural health of the body. However, it has been found that such methods of testing bodies suffer from the vagaries of environmental and operational conditions (e.g. temperature, loads, transducer manufacturing tolerances etc). This can lead to inaccurate test results. Suitably, embodiments of the present invention provide a method of determining the structural health of a body; the method comprising the steps of identifying at least one phase characteristic of a signal represented by first data, the first data being, or having been, derived from the body while bearing at least a guided wave, produced in response to application of a first excitation signal to the body, and a second excitation signal; and providing a measure of the structural health of the body using the at least one phase characteristic. More accurate testing can be performed that is independent of at least some of the above-mentioned vagaries by basing the assessment of the structural body on defect induced phase or frequency modulation.

In Fig. 1 of US20050109110, there is shown a test object body wherein the examined object is excited by piezo-electric transducers. Upon operation of the piezo-electric transducers there are generated waves that propagate through the defect thereby being modulated. The first transducer will produce low frequency excitation while the second transducer will produce a relatively high frequency excitation. The measurements collected at the third transducer are then sent via a line to a data acquisition system, and then sent to a computer, which will further process the data. The determination of the presence of a defect, will be implemented in the computer based on the data collected by analyzing the amplitude and/or phase between the acquired signals.

There is a need for improvement in the methods of detecting damage known so far.

### SUMMARY

There is disclosed a method for detecting damage in a tested object. The method comprises the steps of: positioning the tested object between two actuators and a receiver; applying to the two actuators a first pair of excitation signals, wherein the first excitation signal applied to the first actuator is a high frequency signal and the second excitation signal applied to the second actuator is a low frequency signal; obtaining from the receiver the tested object's response to the first pair of excitation signals as a first response signal; applying to the two actuators a second pair of excitation signals, wherein the first excitation signal applied to the first actuator is a high frequency signal and the second excitation signal applied to the second actuator is a low frequency signal which is in antiphase with respect to the low frequency signal of the first pair of excitation signals; obtaining from the receiver the tested object's response to the second pair of excitation signals as a second response signal; and analyzing the first response signal and the second response signal to determine whether a damage is present in the tested object.

Preferably, the signals are analyzed by: band-pass filtering the first and second response signals, wherein the band pass is proximal to the frequency of the high frequency signal; calculating a difference between the filtered first response signal and the filtered second response signal; and determining whether the difference exceeds a predefined threshold value.

Preferably, the phase between the excitation signals for the first and the second actuators is selected such that for the first pair of excitation signals the damage is perturbed by the signal from the second actuator.

Preferably, the method comprises comparing the RMS value of the measurement noise and comparing the RMS value for the difference of the system's responses signals with a closed and open damage gap.

There is further disclosed a system for detecting damage in a tested object, the system comprising: a pair of actuators configured to couple an excitation signal to the tested object; a receiver arranged to detect the excitation signals propagating through the tested object and to output a response signal; and a controller configured to perform the steps of the method as described above.

Preferably, he actuators and the receiver are piezo-electric transducers.

### BRIEF DESCRIPTION OF DRAWINGS

These and other objects of the invention presented herein are accomplished by providing a system and method for detecting damage in metal or composite materials. Further details and features of the present invention, its nature and various advantages will become more apparent from the following detailed description of the preferred embodiments shown in a drawing, in which:
Fig. 1 presents a diagram of the system according to the invention;
Fig. 2 presents a diagram of the method according to the invention;
Fig. 3 presents a plot of responses to excitation signals;
Fig. 4 presents a zoomed response signal;
Fig. 5 presents a plot of responses to excitation signals together with a difference signal.

### DETAILED DESCRIPTION

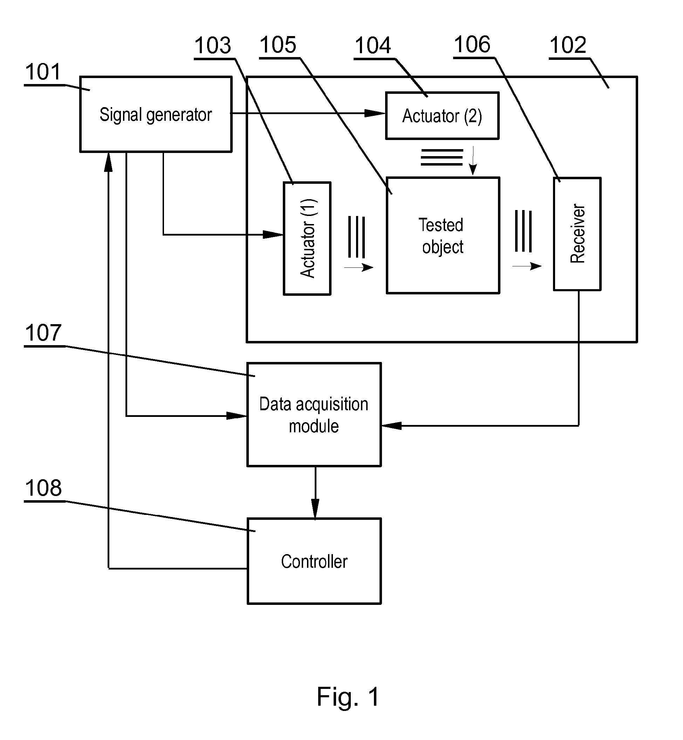

Fig. 1 presents a diagram of the system according to the present invention. The system comprises a pair of actuators 103 and 104, such as for example piezo-electric transducers. The actuators 103, 104 are used to couple an excitation signal to the tested object 105. The dimensions of the object 105 and the characteristics of the excitation signal are such as to produce elastic waves that propagate within the tested object.

A receiver 106, such as a third piezo-electric transducer, is arranged to detect the elastic waves, such as guided waves, shear waves or longitudinal waves. The elastic waves cause the receiver 106 to produce an electrical signal sampled using a data acquisition module 107 and the data samples are stored within a controller 108.

In the embodiment shown in Fig. 1, the excitation signal used to actuate the first actuator 103, is also sampled by the data acquisition module 107. The sampled excitation signal and the sampled elastic wave are stored within the controller 108 for later processing. The controller 108 comprises a suitable internal memory or a can communicate with an external memory.

In preferred embodiments, the excitation signal, provided by the signal generator 101, comprises at least one of: impulse signals, sine waves, that is, a sine burst of a limited number of cycles, and signals with or without an envelope. In preferred embodiments, the excitation signal also comprises a relatively low modal excitation (up to a few kHz), which is substantially continuous or an impact or impulse signal.

Preferably, the first actuator 103 is used to launch an elastic wave via an impulse excitation or a sine burst signal with or without an envelope. The second actuator 104 is used to launch a vibration signal, preferably in the form of a continuous-wave low-frequency signal or impact excitation. The vibration signal should preferably exist within the structure when the elastic wave encounters the defect.

It shall be noted that the frequency of the excitation signal and the actuators selected to induce and detect the elastic waves will depend upon the characteristics of the material of the tested object and the dimensions and shape of the tested object.

In a preferred embodiment, elastic waves are produced within the tested object by applying high frequency signals (eg. 50-500 kHz) to the first actuator 103 and low frequency signals to the second 104 actuator. In an alternative embodiment, a single excitation wave, having two frequency components, is launched into the tested object, using a single actuator to carry both frequency components, rather than launching two excitation waves into the body using respective actuators.

It is to be noted that the excitations may be invoked by different actuators 103, 104, as well as that different data acquisition means 106 may be applied. For example, it is possible to employ excitation via air together with measurement by means of a laser vibrometer.

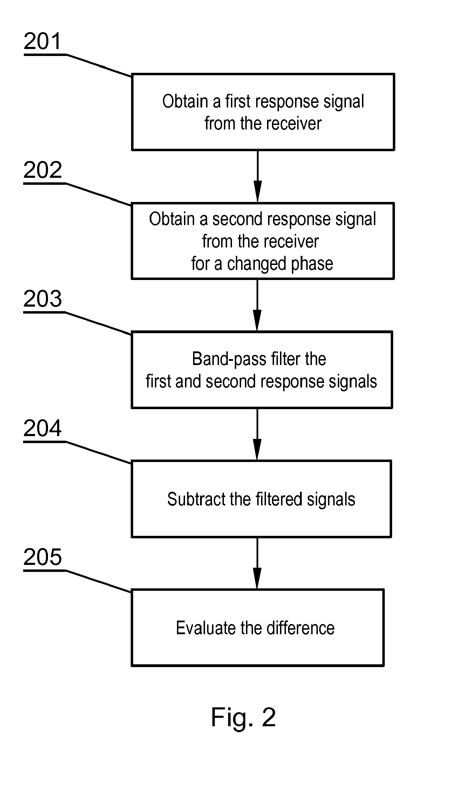

Fig. 2 presents a diagram of the method according to the present invention. The method starts at step 201 by applying a first excitation pair to actuators 103, 104 and obtaining a first response signal from the receiver 106. Next, in step 202 a second excitation pair is applied to actuators 103, 104 and a second response signal is obtained from the receiver 106.

There exists a specific amplitude and/or phase difference between the first and second excitation pair. In particular, the phase between the excitation signals of the first and the second actuator should be set such that for the first measurement, a fatigue gap or delamination of material is opened with a low frequency signal from the second actuator 104 (for the maximum of the excitation amplitude) and at the same time the first actuator 103 is excited with a high frequency signal. However, for the second measurement, the low frequency signal exciting the second actuator 104 should be (at its maximal excitation amplitude) in antiphase (i.e. shifted by 180°) with respect to the low frequency signal used in the first measurement. Similarly to the first measurement, in the second measurement a high frequency signal should be applied to the first actuator 103.

Subsequently, the first and second response signals are band-pass filtered in step 203. The passed band is in proximity to frequency of the high frequency signal. The filtered response signals are subtracted from each other in step 204 in order to determine in step 205 whether the difference exceeds a predefined threshold.

The result of the subtraction is evaluated for the presence of an indication of a damage in the object 105.

A key aspect of the present invention is the synchronization of the low frequency wave with a burst of high frequency wave (for example, a sinusoidal wave with its envelope) such that the burst propagates via the damage when it is (1) closed and (2) open. When the burst propagates via the open damage, it has a different dynamic response than when it propagates via the closed damage and the difference between these dynamic responses is an indicator of the damage.

In other words, the present invention employs synchronization of two waves. The low frequency wave introduces perturbation to the damage (for example, in case of a fatigue gap, in an extreme case (for high excitation amplitude) it causes opening of the gap). Such perturbation causes the ultrasonic wave (i.e. the high frequency wave) propagating through the gap to be distorted (it partially passes through the damage, but is also reflected from the damage). If no damage exists in the material, there is no perturbation and no wave distortion is visible. The synchronization allows making the measurement for a maximum amplitude of the low frequency excitation (at which the perturbation of the damage is maximal). If the second measurement is made without the low frequency excitation, or with the low frequency excitation for a moment at which the excitation amplitude is maximal but in antiphase, then the perturbation of the damage does not occur. Therefore, it is not necessary to open the damage; it is enough for the perturbation of the damage to occur (such as perturbation of an edge of the fatigue gap), as this already distorts the ultrasonic wave. The full opening of the damage would occur for very high excitations, which may be impossible to achieve in practice.

Another advantage of the disclosed method is that two measurements are made in a short time (for maximum low frequency excitation amplitudes in antiphase), therefore the ambient conditions (temperature, load, etc.) do not change.

The responses for two elastic waves introduced with a certain delay with respect to each other should be almost identical for an open damage, and the differences between the responses should be related only to the measurement noise. Similarly, the responses for two elastic waves introduced with a certain delay with respect to each other, for a closed damage, should be almost identical for an open damage, and the differences between the responses should be related only to the measurement noise.

A comparison of RMS (Root Mean Square) value of the measurement noise itself and a comparison of the RMS value for the difference of signals with different responses - with a closed and open damage - have a higher value - if these values are significantly different it means that there is a damage to the examined object.

An important aspect is the determination of different dynamic responses and the corresponding comparison method. Nevertheless, the comparison method may be different, for example by using mutual correlation, comparison of instantaneous phases, instantaneous frequency or instantaneous amplitude. The RMS is used herein as a preferred embodiment due to its fast and convenient calculation.

Therefore, the present method involves comparison of two signals for the same object, in contrast to the method disclosed in US20050109110, which required in practice comparison of data collected at the early life stage of the construction (when it has no damage) and data collected after some exploitation time, to check whether damage has appeared. This is a practical burden, as for each measurement point, data from the early life stage of the object should be stored.

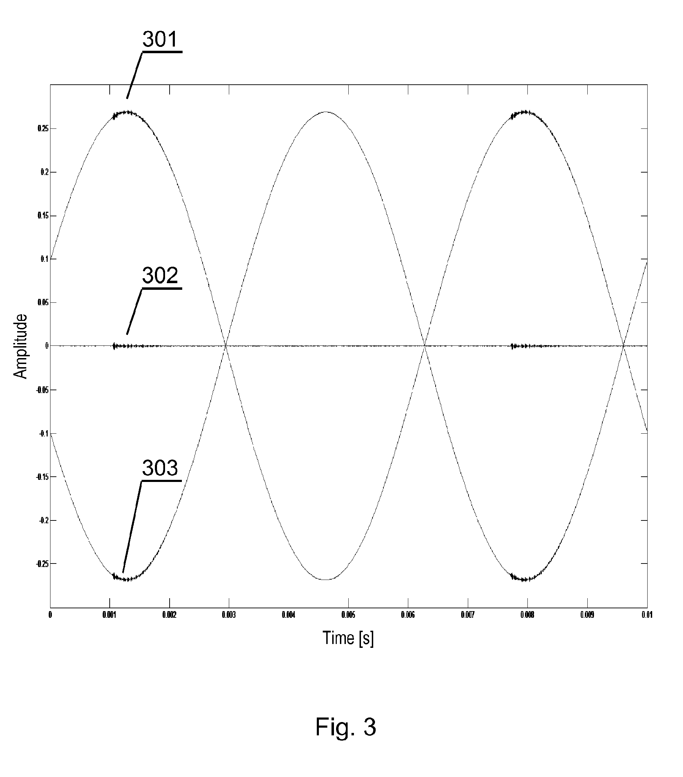

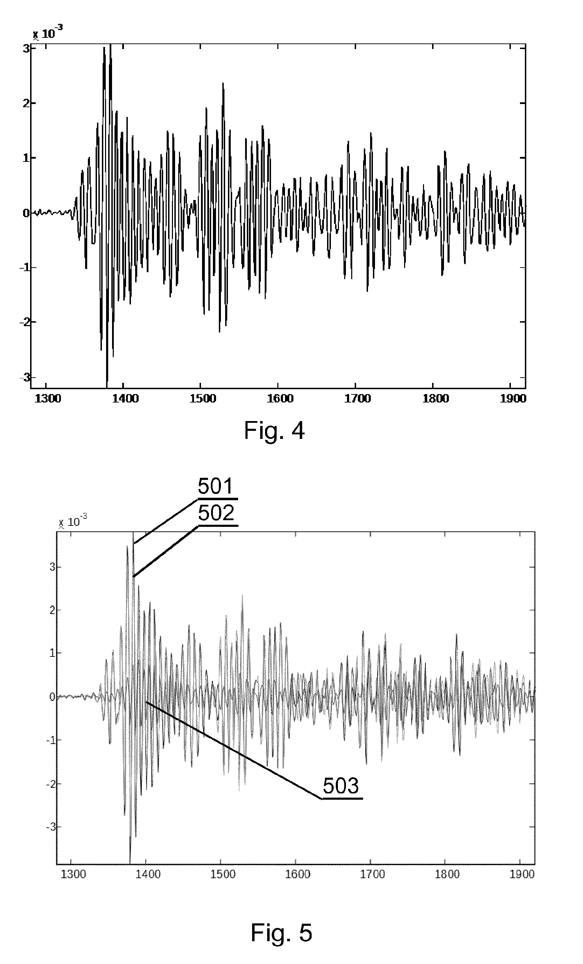

Fig. 3 presents a plot of responses to excitation signals. Signal 301 is the system's response to the first excitation pair, while signal 303 is the system's response to the second excitation pair. Signal 302 is the system's response to the high frequency signal. Fig. 4 presents a zoomed and band-pass filtered response 301 obtained with a sampling frequency of 1 280 000 Hz, while Fig. 5 shows a plot of responses to excitation signals together with a difference signal.

The presented method further allows establishing whether the damage develops. For this purpose there may be determined different kinds of normalized indices of damage. An example of such a damage index may be an RMS (Root Mean Square) value of a difference of signals divided by a sum of RMS values for both signals or a damage index based on cross- correlation.

Indices of damage based on cross-correlation may also be calculated based on the signals resulting from the collected signals - for example: instantaneous phase, instantaneous frequency, instantaneous amplitude.

This method may also be applied to other materials. The invention focuses on the metallic and composite materials, because they are materials that can be used to build constructions/structures that carry loads. Such constructions shall be monitored to detect whether the long-term carrying of loads resulted in damage and to prevent such damage.

The present invention may be used as a monitoring system of sensitive points on fuselage of an airplane, which is subject to cyclic load, and these load cycles contribute to fatigue failures, which can be catastrophic. The system not only identifies defects found in the structure, but also identifies size of such damage. In turn, this information is useful in taking a decision to carry out maintenance on the machine, or whether to postpone it. It is also possible with this method to locate the damage.

Constant monitoring of parts of a machine will also allow for longer intervals between scheduled maintenance in operation. Moreover, the present invention allows to continuously monitor structures and to verify whether the damages are constant or develop. Therefore, various constructions could be designed to tolerate certain level of damage, which can be safely used provided that the damage level is constantly monitored. As the solution presented herein allows easy and cost-effective monitoring, this results in lower cost of exploitation of structures, which are subject to constant monitoring. Therefore, the invention provides a useful, concrete and tangible result.

The present invention applies a particular machine and data processing method thereby fulfilling the machine or transformation test. Thus, the idea underlying the present invention, as implemented, is not abstract.

It can be easily recognized, by one skilled in the art, that the aforementioned method for detecting damage in metal or composite materials may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein. Moreover, the system can be operated by a microcontroller.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for detecting damage in a tested object, the method **characterized in that** it comprises the steps of:
- positioning the tested object (105) between two actuators (103, 104) and a receiver (106);
- applying to the two actuators (103, 104) a first pair of excitation signals, wherein the first excitation signal applied to the first actuator (103) is a high frequency signal and the second excitation signal applied to the second actuator (104) is a low frequency signal;
- obtaining from the receiver (106) the tested object's response to the first pair of excitation signals as a first response signal;
- applying to the two actuators (103, 104) a second pair of excitation signals, wherein the first excitation signal applied to the first actuator (103) is a high frequency signal and the second excitation signal applied to the second actuator (104) is a low frequency signal which is in antiphase with respect to the low frequency signal of the first pair of excitation signals;
- obtaining from the receiver (106) the tested object's response to the second pair of excitation signals as a second response signal; and
- analyzing the first response signal and the second response signal to determine whether a damage is present in the tested object.

2. The method according to claim 1, **characterized by** analyzing the signals by:
- band-pass filtering the first and second response signals, wherein the band pass is proximal to the frequency of the high frequency signal;
- calculating a difference between the filtered first response signal and the filtered second response signal; and
- determining whether the difference exceeds a predefined threshold value.

3. The method according to claim 1, **characterized in that** the phase between the excitation signals for the first and the second actuators (103, 104) is selected such that for the first pair of excitation signals the damage is perturbed by the signal from the second actuator (104).

4. The method according to claim 3, **characterized by** comparing the RMS value of the measurement noise and comparing the RMS value for the difference of the system's responses signals with a closed and open damage gap.

5. A system for detecting damage in a tested object, the system comprising:
- a pair of actuators (103, 104) configured to couple an excitation signal to the tested object (105);
- a receiver (106) arranged to detect the excitation signals propagating through the tested object (105) and to output a response signal; and
- a controller (108) configured to perform the steps of the method according to claim 1.

6. The system according to claim 7, **characterized in that** the actuators (103, 104) and the receiver (106) are piezo-electric transducers.
